(19) Europäisches Patentamt / European Patent Office / Office européen des brevets

(11) **EP 2 863 527 A1**

(12) **DEMANDE DE BREVET EUROPEEN**

(43) Date de publication:
**22.04.2015 Bulletin 2015/17**

(51) Int Cl.:
***H02M 1/32*** (2007.01)

(21) Numéro de dépôt: **13189568.2**

(22) Date de dépôt: **21.10.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **ALSTOM Technology Ltd 5400 Baden (CH)**

(72) Inventeurs:
• **Lapierre, Olivier**
  **91190 GIF SUR YVETTE (FR)**
• **De Preville, Guillaume**
  **78990 ELANCOURT (FR)**

(74) Mandataire: **Ilgart, Jean-Christophe et al BREVALEX**
**95, rue d'Amsterdam**
**75378 Paris Cedex 8 (FR)**

(54) **Protection d'un convertisseur de tension**

(57) Procédé de protection d'un convertisseur (1) comportant au moins une phase et relié à un réseau d'alimentation électrique 2),
caractérisé en ce qu'il comporte pour ladite au moins une phase :
- mesure du courant d'entrée ($I_{VSC}$) du convertisseur (1),
- mesure de la tension ($V_{grid}$) au point de connexion (P) au réseau d'alimentation électrique (2),

- détermination d'une valeur maximale et d'une valeur minimale de tension de sortie du convertisseur, en fonction d'une valeur de courant maximal, du courant et de la tension mesurés, et
- limitation de la tension de sortie ($V_{VSC}$) du convertisseur (1) en fonction de la valeur maximale et de la valeur minimale déterminées.

FIG. 1

**Description**

**DOMAINE TECHNIQUE**

La présente invention concerne les convertisseurs de tension et plus particulièrement leur protection contre des défauts.

L'invention s'applique à tout type de convertisseur de tension, qu'il soit monophasé ou multiphasé, contrôlé en courant ou en tension, fonctionnant en mode équilibré ou déséquilibré.

L'invention s'applique à un grand nombre de domaines, tels que la conversion de fréquence pour traction ferroviaire, la conversion en source de tension pour courant continu haute tension (HVDC VSC d'après l'anglais : High Voltage Direct Current Voltage Source Converter), ou l'alimentation haute tension des navires à quai (HVSC, d'après l'anglais High Voltage Shore Connection), par exemple.

**ÉTAT DE LA TECHNIQUE ANTÉRIEURE**

Les convertisseurs à circuit intermédiaire de tension, qu'ils soient pilotés en tension ou en courant, peuvent difficilement faire face à un court-circuit au point de connexion.

En effet, lorsque le convertisseur est piloté en tension, il ne contrôle pas son courant. Mais le problème existe également lorsqu'il est piloté en courant du fait d'un brutal déphasage de la tension et de la modification de la nature du courant de sortie. La partie active du courant s'annule brutalement et le contrôle doit modifier la tension de sortie par l'intermédiaire du contrôleur de courant de sortie.

Un convertisseur délivrant ou absorbant de la puissance active ne peut pas garantir la limitation de courant par le contrôleur de courant lui-même. La garantie de la limitation du courant de sortie pour tous les cas de défaut pouvant intervenir sur un réseau devient alors délicate.

**EXPOSÉ DE L'INVENTION**

L'invention vise à résoudre les problèmes de la technique antérieure en fournissant un procédé de protection d'un convertisseur comportant au moins une phase et relié à un réseau d'alimentation électrique,

**caractérisé en ce qu'il** comporte pour ladite au moins une phase :

- mesure du courant d'entrée du convertisseur,
- mesure de la tension au point de connexion au réseau d'alimentation électrique,
- détermination d'une valeur maximale et d'une valeur minimale de tension de sortie du convertisseur, en fonction d'une valeur de courant maximal, du courant et de la tension mesurés, et
- limitation de la tension de sortie du convertisseur en fonction de la valeur maximale et de la valeur minimale déterminées.

Grâce à l'invention, la tension de sortie du convertisseur est limitée. Cette limitation prend en compte la tension au point de connexion et la valeur instantanée du courant d'entrée du convertisseur par rapport à une valeur limite de courant. Ainsi, lorsque le courant s'approche de la valeur maximale autorisée, la tension de sortie se rapproche instantanément de la tension au point de connexion.

Lorsque le courant instantané atteint sa valeur maximale, la tension de sortie du convertisseur devient égale à la tension au point de connexion.

Le fait que l'excursion de tension de sortie du convertisseur autour de la tension au point de connexion soit limitée et soit fonction de l'écart de courant instantané par rapport à la valeur maximale permet ainsi de limiter le courant maximal de sortie.

La limitation du courant de sortie du convertisseur selon l'invention présente plusieurs avantages. Tout d'abord, elle est instantanée, ce qui est très important en cas de court-circuit. Elle ne dépend pas de la structure du convertisseur, ni de son mode de contrôle (courant ou tension). Elle est donc utilisable pour tous types de convertisseur. En outre, elle s'applique à tous types de défauts, tels que des défauts monophasés, biphasés ou triphasés.

Selon une caractéristique préférée, le convertisseur étant relié au réseau d'alimentation par l'intermédiaire d'un transformateur, lorsque le convertisseur est multiphasé, l'étape de détermination comporte :

- la détermination d'une valeur de tension à partir des tensions mesurées pour les différentes phases, et d'un ratio et d'un couplage du transformateur, et
- la prise en compte de la valeur de tension déterminée dans la détermination de la valeur maximale et de la valeur minimale de tension de sortie du convertisseur.

Selon une caractéristique préférée, l'étape de détermination comporte :

- le calcul du produit par un gain de la différence entre la valeur de courant maximal et le courant mesuré,
- l'addition du résultat du produit calculé avec la valeur de tension déterminée pour former la valeur maximale de tension de sortie du convertisseur.

Selon une autre caractéristique préférée, l'étape de détermination comporte :

- le calcul du produit par un gain de la différence entre l'opposé de la valeur de courant maximal et le courant mesuré,
- l'addition du résultat du produit calculé avec la valeur de tension déterminée pour former la valeur minimale de tension de sortie du convertisseur.

L'invention concerne aussi un circuit de protection d'un convertisseur comportant au moins une phase et relié à un réseau d'alimentation électrique,
**caractérisé en ce qu'il** comporte pour ladite au moins une phase :

- un moyen de mesure du courant d'entrée du convertisseur,
- un moyen de mesure de la tension au point de connexion au réseau d'alimentation électrique,
- un moyen de détermination d'une valeur maximale et d'une valeur minimale de tension de sortie du convertisseur, en fonction d'une valeur de courant maximal, du courant et de la tension mesurés, et
- un moyen de limitation de la tension de sortie du convertisseur en fonction de la valeur maximale et de la valeur minimale déterminées.

Le circuit présente des avantages analogues à ceux précédemment présentés.
Selon une caractéristique préférée, le convertisseur étant relié au réseau d'alimentation par l'intermédiaire d'un transformateur, lorsque le convertisseur est multiphasé, le moyen de détermination est adapté pour :

- déterminer une valeur de tension à partir des tensions mesurées pour les différentes phases, et d'un ratio et d'un couplage du transformateur, et
- prendre en compte la valeur de tension déterminée dans la détermination de la valeur maximale et de la valeur minimale de tension de sortie du convertisseur.

Selon une caractéristique préférée, le moyen de détermination est adapté pour :

- calculer le produit par un gain de la différence entre la valeur de courant maximal et le courant mesuré,
- additionner le résultat du produit calculé avec la valeur de tension déterminée pour former la valeur maximale de tension de sortie du convertisseur.

Selon une caractéristique préférée, le moyen de détermination est adapté pour :

- calculer le produit par un gain de la différence entre l'opposé de la valeur de courant maximal et le courant mesuré,
- additionner le résultat du produit calculé avec la valeur de tension déterminée pour former la valeur minimale de tension de sortie du convertisseur.

## BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :

- La figure 1 représente un convertisseur équipé d'un circuit de protection selon l'invention,
- La figure 2 représente un mode de réalisation du circuit de protection de la figure 1,
- La figure 3 représente les courants de sortie d'un convertisseur triphasé, dans un cas de court-circuit sans mise en oeuvre du circuit de protection selon l'invention,
- La figure 4 représente les courants de sortie d'un convertisseur triphasé, dans le même cas de court-circuit mais avec mise en oeuvre du circuit de protection selon l'invention,
- La figure 5 représente la tension de sortie d'un circuit de protection d'un convertisseur triphasé, dans le même cas de court-circuit, avec mise en oeuvre du circuit de protection selon l'invention, et
- La figure 6 représente un procédé de protection d'un convertisseur, selon l'invention.

**EXPOSÉ DÉTAILLÉ DE MODES DE RÉALISATION PARTICULIERS**

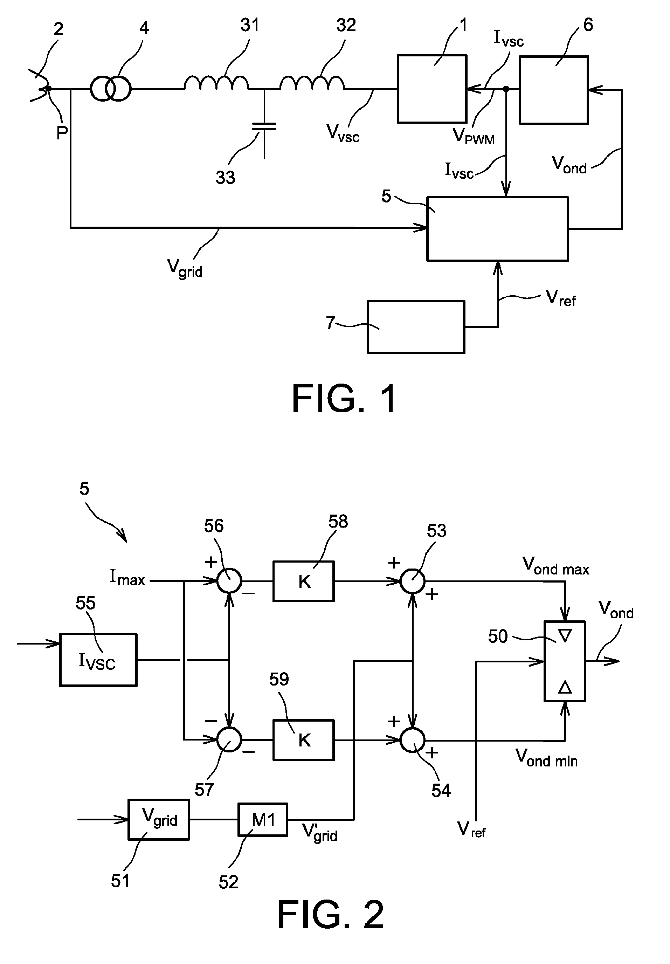

La **figure 1** représente un convertisseur 1 connecté à un point P d'un réseau d'alimentation électrique 2.

Le convertisseur 1 est connu en soi. Il peut être contrôlé en courant ou en tension. Il peut fonctionner en mode équilibré ou déséquilibré.

Plus précisément, une sortie du convertisseur 1 est reliée à une entrée d'un circuit de filtrage 3. Une sortie du circuit de filtrage 3 est connectée à un transformateur 3 qui lui-même est relié au point de connexion P.

Le circuit de filtrage 3 a par exemple une structure de filtre LC en « T » et comporte à partir de son entrée une première inductance 31 reliée en série avec une seconde inductance 32, elle-même reliée à la sortie du circuit de filtrage. Un condensateur 33 est relié au point milieu entre les deux inductances. Bien entendu, d'autres structures de circuit de filtrage peuvent être mises en oeuvre.

Un circuit de modulation de largeur d'impulsion 6, dit PWM d'après l'anglais Pulse Width Modulation, est relié à une entrée du convertisseur 1. Le circuit 6 délivre une tension $V_{PWM}$ au convertisseur 1.

La tension mesurée au point de connexion P est notée $V_{grid}$, le courant mesuré à l'entrée du convertisseur est noté $I_{VSC}$ et la tension en sortie du convertisseur 1 est notée $V_{VSC}$.

Selon l'invention, un circuit 5 de protection du convertisseur 1 est connecté entre le point de connexion P et une entrée du circuit de modulation de largeur d'impulsion 6.

Le circuit 5 de protection du convertisseur comporte une entrée pour la mesure de la tension $V_{grid}$ au point de connexion P et une entrée pour la mesure du courant $I_{VSC}$ à l'entrée du convertisseur 1.

Le circuit 5 de protection comporte également une entrée reliée à une sortie d'un contrôleur 7. Le contrôleur 7 délivre une tension de référence $V_{réf}$ au circuit 5 de protection.

Le circuit 5 de protection comporte enfin une sortie connectée à une entrée du circuit de modulation de largeur d'impulsion 6. Le circuit 5 de protection délivre au circuit 6 une tension $V_{ond}$ qui est limitée par le circuit de protection 5, comme exposé dans la suite. La tension $V_{VSC}$ délivrée par le convertisseur 1 suit la tension $V_{ond}$.

Le circuit de la figure 1 ne comporte qu'une phase, mais il peut être multiphasé. Dans ce cas, chaque phase comporte des éléments similaires à ceux précédemment décrits.

Selon un mode de réalisation préféré représenté à la **figure 2**, le circuit 5 de protection du convertisseur 1 comporte les éléments suivants, pour une phase.

A partir de son entrée pour la mesure de la tension $V_{grid}$ au point de connexion P, le circuit 5 de protection du convertisseur comporte un circuit 51 de mesure de la tension $V_{grid}$. Le circuit 51 est connu en soi. Le circuit 51 a une sortie reliée à une unité de calcul 52 qui, dans le cas multiphasé, calcule une tension $V'_{grid}$ à partir d'une matrice dépendante du ratio et du couplage du transformateur 3.

Il est à noter que dans le cas monophasé, la tension $V'_{grid}$ est égale à la tension $V_{grid}$.

L'unité de calcul 52 comporte une sortie reliée à une entrée d'un additionneur 53 et à une entrée d'un additionneur 54.

A partir de son entrée pour la mesure du courant instantané $I_{VSC}$ à l'entrée du convertisseur 1, le circuit 5 de protection du convertisseur comporte un circuit 55 de mesure du courant $I_{VSC}$. Le circuit 55 est connu en soi.

Le circuit 55 comporte une sortie reliée à une entrée d'un additionneur-soustracteur 56 et à une entrée d'un additionneur-soustracteur 57.

L'additionneur-soustracteur 56 et l'additionneur-soustracteur 57 comportent chacun une entrée qui reçoit une valeur de courant maximal $I_{max}$. La valeur $I_{max}$ est la valeur instantanée de courant à ne pas dépasser.

Plus précisément, l'additionneur-soustracteur 56 réalise l'opération suivante :

$$I_{max} - I_{VSC}$$

L'additionneur-soustracteur 56 comporte une sortie connectée à une unité de calcul 58 qui applique un gain K au signal qu'il reçoit et délivre donc en sortie :

$$K.(I_{max} - I_{VSC})$$

L'unité de calcul 58 comporte une sortie reliée à une entrée de l'additionneur 53.

L'additionneur 53 détermine une valeur maximale de tension $V_{ondmax}$ en réalisant l'opération suivante :

$$V_{ondmax} = V'_{grid} + K.(I_{max} - I_{VSC})$$

La valeur maximale de tension $V_{ondmax}$ dépend ainsi de la tension mesurée au point de connexion et de la différence du courant instantané $I_{VSC}$ avec la valeur de courant maximal $I_{max}$.

De manière similaire, l'additionneur-soustracteur 57 réalise l'opération suivante :

$$- I_{max} - I_{VSC}$$

L'additionneur-soustracteur 57 comporte une sortie connectée à une unité de calcul 59 qui applique un gain K au signal qu'il reçoit et délivre donc en sortie :

$$K.(- I_{max} - I_{VSC})$$

L'unité de calcul 59 comporte une sortie reliée à une entrée de l'additionneur 54.

L'additionneur 54 détermine une valeur minimale de tension $V_{ondmin}$ en réalisant l'opération suivante :

$$V_{ondmin} = V'_{grid} + K.(- I_{max} - I_{VSC})$$

La valeur minimale de tension $V_{ondmin}$ dépend ainsi de la tension mesurée au point de connexion et de la différence du courant instantané $I_{VSC}$ avec la valeur de courant minimal $-I_{max}$.

L'additionneur 53 a une sortie connectée à une première entrée d'un limiteur 50. De même, l'additionneur 54 a une sortie connectée à une deuxième entrée du limiteur 50.

Le limiteur 50 a une troisième entrée qui reçoit la tension $V_{réf}$ délivrée par le contrôleur 7.

Le limiteur 50 a une sortie pour délivrer la tension $V_{ond}$ qui est limitée par les tensions $V_{ondmin}$ et $V_{ondmax}$.

Les tensions $V_{ondmin}$ et $V_{ondmax}$ définissent une plage autorisée pour la tension de sortie du convertisseur. Cette plage dépend de la valeur de courant maximal $I_{max}$, du courant $I_{VSC}$ mesuré à l'entrée du convertisseur 1, et de la tension mesurée au point de connexion P au réseau d'alimentation 2.

Si le courant instantané mesuré augmente et devient égal au courant maximal $I_{max}$, alors la tension $V_{ondmax}$ devient égale à $V'_{grid}$ qui dépend de la tension au point de connexion P. La tension de sortie $V_{ond}$ du circuit de protection 5 est alors limitée à $V'_{grid}$.

De même, si le courant instantané mesuré diminue et devient égal au courant minimal $-I_{max}$, alors la tension $V_{ondmin}$ devient égale à $V'_{grid}$ qui dépend de la tension au point de connexion P. La tension de sortie $V_{ond}$ du circuit de protection 5 est alors limitée à $V'_{grid}$.

Le convertisseur 1 délivre la tension $V_{VSC}$ qui suit la tension $V_{ond}$. Ainsi le circuit de protection 5 limite la tension de sortie du convertisseur.

L'excursion de la tension de sortie du convertisseur est limitée et fonction de l'écart de courant instantanée par rapport à la valeur de courant maximal, ce qui permet de limiter le courant maximal de sortie.

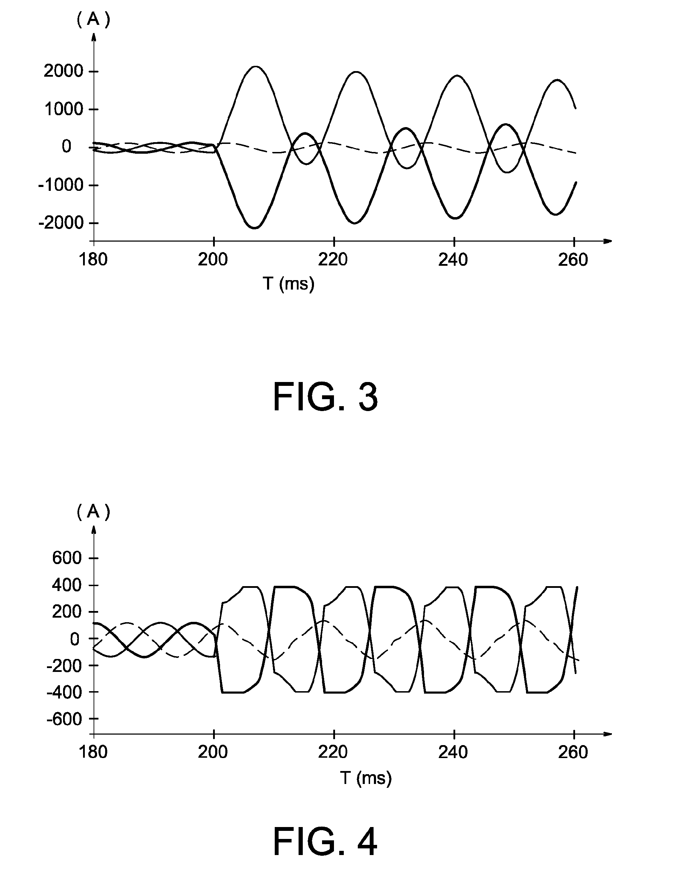

La **figure 3** représente les courants de trois phases en sortie d'un convertisseur triphasé, dans le cas où l'invention n'est pas mise en oeuvre et où il y a court-circuit sur deux phases.

On voit qu'à partir de l'apparition du défaut au temps t = 200 ms, les courants des phases en court-circuit prennent des valeurs très importantes, de l'ordre de 2000 A. La conséquence de telles valeurs de courant est la déconnexion du convertisseur, et le déclenchement de disjoncteurs de protection (non représentés dans les figures).

La **figure 4** représente les courants de trois phases en sortie du convertisseur triphasé, dans le cas où l'invention est mise en oeuvre comme exposé en référence aux figures 1 et 2 et où il y a court-circuit sur deux phases.

On voit qu'à partir de l'apparition du défaut au temps t = 200 ms, les courants des phases en court-circuit sont écrêtés et prennent des valeurs limitées à 400 A, soit des valeurs maximales bien inférieures à celles de la figure 3. La modification de la tension de sortie du convertisseur par le circuit de protection 5 introduit une limitation du courant de sortie du convertisseur qui est immédiate.

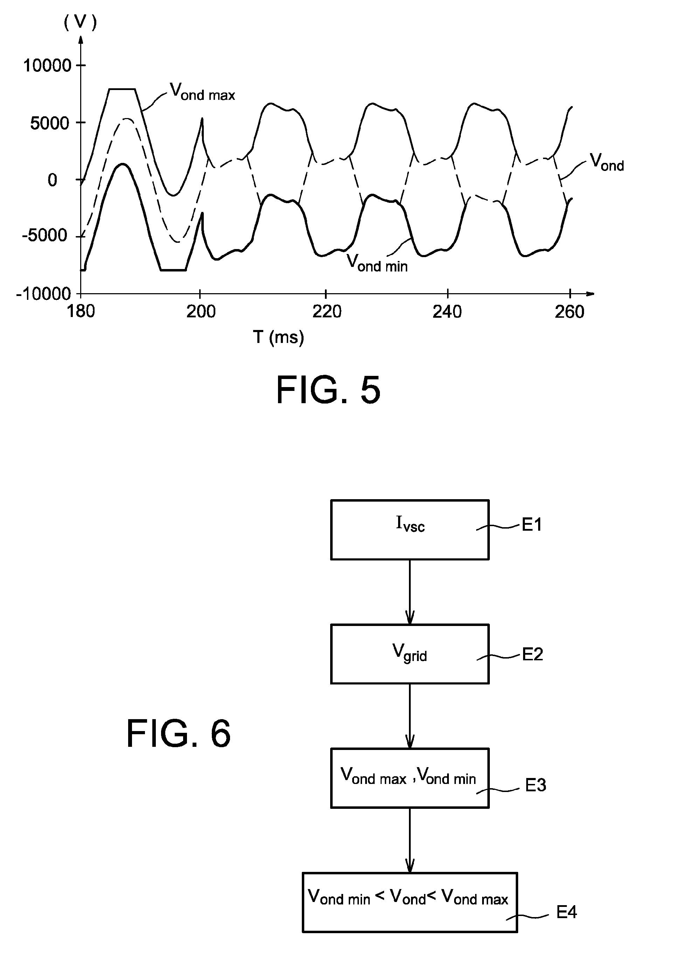

La **figure 5** représente la tension $V_{ond}$ de sortie du circuit de protection 5, dans le même cas de court-circuit, avec mise en oeuvre du circuit de protection comme exposé plus haut.

La tension $V_{ond}$ est limitée par les tensions $V_{ondmax}$ et $V_{ondmin}$ La tension de sortie $V_{VSC}$ du convertisseur 1 suit la tension $V_{ond}$ et est par conséquent également limitée par les tensions $V_{ondmax}$ et $V_{ondmin}$.

La **figure 6** représente un procédé de protection d'un convertisseur comportant au moins une phase, tel que celui représenté aux figures 1 et 2. Le procédé comporte des étapes E1 à E4 mises en oeuvre pour ladite au moins une phase.

L'étape E1 est la mesure du courant d'entrée $I_{VSC}$ du convertisseur 1.

L'étape suivante E2 est la mesure de la tension $V_{grid}$ au point P de connexion au réseau d'alimentation 2.

L'étape suivante E3 est la détermination d'une valeur maximale $V_{ondmax}$ et d'une valeur minimale $V_{ondmin}$ qui déterminent une plage de variation pour la tension de sortie du convertisseur, en fonction d'une valeur de courant maximal $I_{max}$, du courant $I_{VSC}$ et de la tension $V_{grid}$ mesurés.

La valeur maximale $V_{ondmax}$ est déterminée par une formule de type :

$$V_{ondmax} = V'_{grid} + K.(I_{max} - I_{VSC})$$

Dans laquelle $V'_{grid}$ désigne une tension qui dépend de la tension $V_{grid}$ mesurée, $I_{max}$ désigne une valeur de courant maximal et K désigne un gain.

La valeur minimale $V_{ondmin}$ est déterminée par une formule de type :

$$V_{ondmin} = V'_{grid} + K.(- I_{max} - I_{VSC}).$$

L'étape suivante E4 est la limitation de la tension de sortie $V_{VSC}$ du convertisseur dans une plage de valeurs qui dépend de la valeur maximale $V_{ondmax}$ et de la valeur minimale $V_{ondmin}$ déterminées à l'étape E3. Cette plage dépend de la valeur de courant maximal $I_{max}$, du courant $I_{VSC}$ mesuré à l'entrée du convertisseur 1, et de la tension mesurée au point de connexion P au réseau d'alimentation 2.

L'excursion de la tension de sortie du convertisseur est limitée et fonction de l'écart de courant instantanée par rapport à la valeur de courant maximal, ce qui permet de limiter le courant maximal de sortie.

## Revendications

1. Procédé de protection d'un convertisseur comportant au moins une phase et relié à un réseau d'alimentation électrique,
   **caractérisé en ce qu'il** comporte pour ladite au moins une phase :

   - mesure du courant d'entrée du convertisseur,
   - mesure de la tension au point de connexion au réseau d'alimentation électrique,
   - détermination d'une valeur maximale et d'une valeur minimale de tension de sortie du convertisseur, en fonction d'une valeur de courant maximal, du courant et de la tension mesurés, et
   - limitation de la tension de sortie du convertisseur en fonction de la valeur maximale et de la valeur minimale déterminées.

2. Procédé de protection selon la revendication 1, le convertisseur étant relié au réseau d'alimentation par l'intermédiaire d'un transformateur, **caractérisé en ce que**, lorsque le convertisseur est multiphasé, l'étape de détermination comporte :

   - la détermination d'une valeur de tension ($V'_{grid}$) à partir des tensions mesurées pour les différentes phases, et d'un ratio et d'un couplage du transformateur, et
   - la prise en compte de la valeur de tension déterminée dans la détermination de la valeur maximale et de la valeur minimale de tension de sortie du convertisseur.

3. Procédé de protection selon la revendication 2, **caractérisé en ce que** l'étape de détermination comporte :

   - le calcul du produit par un gain de la différence entre la valeur de courant maximal et le courant mesuré,
   - l'addition du résultat du produit calculé avec la valeur de tension déterminée pour former la valeur maximale de tension de sortie du convertisseur.

**4.** Procédé de protection selon la revendication 2 ou 3, **caractérisé en ce que** l'étape de détermination comporte :

- le calcul du produit par un gain de la différence entre l'opposé de la valeur de courant maximal et le courant mesuré,
- l'addition du résultat du produit calculé avec la valeur de tension déterminée pour former la valeur minimale de tension de sortie du convertisseur.

**5.** Circuit de protection d'un convertisseur comportant au moins une phase et relié à un réseau d'alimentation électrique, **caractérisé en ce qu'il** comporte pour ladite au moins une phase :

- un moyen de mesure du courant d'entrée du convertisseur,
- un moyen de mesure de la tension au point de connexion au réseau d'alimentation électrique,
- un moyen de détermination d'une valeur maximale et d'une valeur minimale de tension de sortie du convertisseur, en fonction d'une valeur de courant maximal, du courant et de la tension mesurés, et
- un moyen de limitation de la tension de sortie du convertisseur en fonction de la valeur maximale et de la valeur minimale déterminées.

**6.** Circuit de protection selon la revendication 5, le convertisseur étant relié au réseau d'alimentation par l'intermédiaire d'un transformateur, **caractérisé en ce que**, lorsque le convertisseur est multiphasé, le moyen de détermination est adapté pour :

- déterminer une valeur de tension à partir des tensions mesurées pour les différentes phases, et d'un ratio et d'un couplage du transformateur, et
- prendre en compte la valeur de tension déterminée dans la détermination de la valeur maximale et de la valeur minimale de tension de sortie du convertisseur.

**7.** Circuit de protection selon la revendication 6, **caractérisé en ce que** le moyen de détermination est adapté pour :

- calculer le produit par un gain de la différence entre la valeur de courant maximal et le courant mesuré,
- additionner le résultat du produit calculé avec la valeur de tension déterminée pour former la valeur maximale de tension de sortie du convertisseur.

**8.** Circuit de protection selon la revendication 6 ou 7, **caractérisé en ce que** le moyen de détermination est adapté pour :

- calculer le produit par un gain de la différence entre l'opposé de la valeur de courant maximal et le courant mesuré,
- additionner le résultat du produit calculé avec la valeur de tension déterminée pour former la valeur minimale de tension de sortie du convertisseur.

**FIG. 1**

**FIG. 2**

FIG. 3

FIG. 4

FIG. 5

FIG. 6

Europäisches
Patentamt

European
Patent Office

Office européen
des brevets

## RAPPORT DE RECHERCHE EUROPEENNE

Numéro de la demande

EP 13 18 9568

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | EP 2 566 035 A2 (ROLLS ROYCE PLC [GB]) 6 mars 2013 (2013-03-06) * alinéa [0120] - alinéa [0125]; figures 4a-4c * ----- | 1-8 | INV. H02M1/32 |
| A | MEYER ROBERT ET AL: "Fault ride through control of medium-voltage converters with LCL filter in distributed generation systems", 2013 IEEE ENERGY CONVERSION CONGRESS AND EXPOSITION, IEEE, 15 septembre 2013 (2013-09-15), pages 1954-1961, XP032516748, DOI: 10.1109/ECCE.2013.6646947 [extrait le 2013-10-24] * alinéa [000I] * ----- | 1,5 | |

| DOMAINES TECHNIQUES RECHERCHES (IPC) |
|---|
| H02M |

Le présent rapport a été établi pour toutes les revendications

| Lieu de la recherche | Date d'achèvement de la recherche | Examinateur |
|---|---|---|
| La Haye | 15 mai 2014 | Imbernon, Lisa |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 9568

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-05-2014

| Document brevet cité au rapport de recherche | Date de publication | Membre(s) de la famille de brevet(s) | Date de publication |
|---|---|---|---|
| EP 2566035 A2 | 06-03-2013 | EP 2566035 A2<br>US 2013051103 A1 | 06-03-2013<br>28-02-2013 |